# EUROPÄISCHE PATENTSCHRIFT

(11) **EP 0 888 671 B1**
(45) Veröffentlichungstag und Bekanntmachung des Hinweises auf die Patenterteilung: **06.10.2004**
(21) Anmeldenummer: 97948687.5
(22) Anmeldetag: 29.10.1997
(51) Int. Cl.: H04B 7/26

(54) **MOBILFUNKGERÄT UND VERFAHREN ZUM BESTIMMEN DER EMPFANGSFELDSTÄRKE**
MOBILE RADIO APPARATUS AND PROCESS FOR DETERMINING THE RECEIVING FIELD INTENSITY
POSTE DE RADIO MOBILE ET PROCEDE DE DETERMINATION DE L'INTENSITE DU CHAMP DE RECEPTION

(30) Priorität: 20.12.1996 DE 19653556
(43) Veröffentlichungstag der Anmeldung: 07.01.1999
(73) Patentinhaber: SIEMENS AKTIENGESELLSCHAFT, 80333 München (DE)
(72) Erfinder: HOFMANN, Ludwig, D-85304 Ilmmünster (DE); RAAF, Bernhard, D-81475 München (DE)
(86) Internationale Anmeldenummer: PCT/DE1997/002517
(87) Internationale Veröffentlichungsnummer: WO 1998/028862

(56) Entgegenhaltungen:
- US-A- 5 630 218

## Beschreibung

Die Erfindung bezieht sich auf ein Verfahren zum Bestimmen der Empfangsfeldstärke der HF-Träger von Nachbarkanälen sowie des aktuellen Kanals bei einem in einem TDMA-System betriebenen Mobilfunkgerät, bei welchem für jeden HF-Träger mehrere Einzelmessungen während eines Ermittlungszeitraumes durchgeführt werden und aus den entsprechenden Einzelmeßwerten ein repräsentativer, ermittelter Wert gebildet wird. Ein derartiges Verfahren ist z.B. aus der JP 07 038513 bzw. aus der US 5,630,218 bekannt.

Ebenso bezieht sich die Erfindung auf ein Mobilfunkgerät zum Betrieb in einem TDMA-System, mit von einem Synthesizer gesteuerten HF-Empfangs- und Sendeeinheiten, mit einer NF-Einheit zugeordneten Modulator- und Demodulatoreinheiten, mit einer Pegelmeß- und Speichereinheit, mit einem Zähler und einer zeitabhängigen Steuerung, welche dem Synthesizer, den HF-Teilen, der Demodulatoreinheit sowie der Pegelmeß- und Speichereinheit zugeordnet ist, mit einer Frequenzreferenzeinheit für Synthesizer, Zähler und zeitabhängige Steuerung und für die Modulator- und Demodulatoreinheiten, sowie mit einer Steuerlogik zur Steuerung der Pegelmeß- und Speichereinheit und anderer Einheiten, wobei die Steuerlogik und der Zähler mit der zeitabhängigen Steuerung in Zusammenwirken mit dem HF-Empfangsteil, dem Demodulator und der Pegelmeß- und Steuereinheit dazu eingerichtet sind, während eines Ermittlungszeitraumes die Pegel vorgegebener HF-Träger wiederholt zu messen und aus den ermittelten Einzelmeßwerten einen repräsentativen Wert zu bilden.

Moderne Mobilfunkgeräte, wie z. B. solche, die nach dem GSM-System arbeiten, müssen regelmäßig auf vorgegebenen Frequenzen die Feldstärke messen, um ein problemloses Handover zu einer neuen Basisstation zu ermöglichen. Im GSM-System sind beispielsweise 124 HF-Kanäle vorgesehen, von welchen die Basisstation dem Mobilfunkgerät bis zu 32 HF-Kanäle vorgibt, deren Feldstärke zu überprüfen ist. Die Feldstärken der sechs stärksten Träger werden in einem Speicher immer am aktuellen Stand gehalten.

Das Mobilfunkgerät muß eine vorgeschriebene Mindestanzahl von Feldstärkemessungen vornehmen, die zu möglichst gleich verteilten Zeiten erfolgen sollen. Aus den ermittelten Meßwerten, im GSM-System meist fünf, wird ein Mittelwert gebildet, wodurch Fehlinterpretationen z. B. wegen kurzzeitigem Fading oder vorübergehender Abschaltungen vermieden werden sollen.

Die Feldstärkemessungen erfolgen während eines Gespräches ebenso wie im sogenannten Idle Mode. Die Basisstation sendet hierzu immer auf einer vorgegebenen Frequenz, im GSM-System der "CO"-Frequenz, auch dann, wenn dies für die eigentliche Signalisierung nicht erforderlich ist. Zwischen zwei entsprechenden Bursts des TDMA-Systems darf die Basisstation auch kurzzeitig mit geringerer Leistung senden, sodaß es zwischen aufeinanderfolgenden Bursts Feldstärkeeinbrüche gibt (auch als "up/down ramping" bezeichnet). Bezüglich der erforderlichen Feldstärkemessung wird beispielsweise auf DRAFT pr ETS 300578, May 1995 des ETSI (European Telecommunications Standard Institute), verwiesen. Aus der GSM-Technical Specification, GSM 05.02, August 1996, Version 5.1.0 des ETSI geht auch die Messung über die Dauer eines Zeitschlitzes hervor. Die Feldstärkemessung an Nachbarzellen und die damit verbundenen Probleme sind weiters in Kapitel 4.1.4.3 des Buches "The GSM System", M. Mouly und Marie-B. Pautet, Palaiseau 1992, beschrieben.

Nach dem Stand der Technik wird die Feldstärke auf jedem CO-Kanal fünfmal je für die Dauer eines Zeitschlitzes gemessen, wobei im allgemeinen nicht von Beginn bis zum Ende eines Bursts gemessen wird, sondern die Meßzeit von der Dauer eines Bursts einen Teil eines Bursts und einen Teil der folgenden Bursts erfaßt. Dies liegt daran, daß die Zeitraster der einzelnen Funkzellen zwar gleiche Burstdauer aufweisen, jedoch gegeneinander versetzt sind.

Bei netzunabhängigen Empfängern bzw. Mobilfunkgeräten, wie z. B. solchen nach dem GSM-Standard arbeitenden, wird besonderer Wert auf niedrigen Stromverbrauch gelegt, um mit einer Batterie bzw. einer Akkumulatorladung einen möglichst langen Betrieb, insbesondere Standby-Betrieb zu gewährleisten. Man ist daher bestrebt, nicht benötigte Funktionen so lange wie möglich nicht auszuführen, um den mittleren Stromverbrauch zu reduzieren. Bei Geräten, die in einem Funknetz mit Zeitmultiplex-Organisation arbeiten, gibt es einen Bereitschaftsmodus, auch Standby-Betrieb oder Idle Mode genannt. In diesem können beispielsweise alle nicht benötigten Funktionsgruppen periodisch von der Stromversorgung getrennt werden, um den mittleren Energiebedarf zu senken.

Zu den im Idle Mode strombelastenden Funktionen zählt auch die Messung der Kanalfeldstärken, welche nachhaltig die mit einer Akkumulatorladung erzielbare Betriebsdauer des Mobilfunkgerätes verkürzt.

Eine Aufgabe der Erfindung liegt darin, ein. Verfahren zur Messung von Kanalfeldstärken sowie ein entsprechend eingerichtetes Mobilfunkgerät anzugeben, welches die Nachteile bekannter Lösungen vermeidet.

Diese Aufgabe wird durch ein Verfahren bzw. ein Erzeugnis nach einem der unabhängigen Patentansprüche gelöst.

Dank der Erfindung ergibt sich eine erhebliche Einsparung des Stromverbrauchs sowohl des analogen als auch des digitalen Empfangsteils. Wird beispielsweise nur während eines Fünftels der Dauer eines Zeitschlitzes gemessen, so führt dies im wesentlichen zu einer Reduktion des Stromverbrauchs für Feldstärkemessungen auf 20 % des üblichen Wertes. Dementsprechend wird eine längere Betriebsdauer, insbesondere bei Bereitschaftsbetrieb erzielt. Wenngleich die Vorteile der erfindungsgemäßen Lösung sind, ist die Erfindung als solche nicht nahegelegen, da der Fachmann auf diesem Gebiet sich bei Pegelmessungen bedingungslos an das Burstraster hielt und die Messungen immer über einen ganzen Zeitschlitz durchführte.

Besonders vorteilhaft ist es, wenn die Einzelmessungen bezüglich des Zeitrasters versetzt erfolgen. Auf diese Weise können Fehlmessungen, deren Ursache immer an der gleichen Stelle eines Bursts auftretende Störungen oder Unregelmäßigkeiten sind, vermieden werden.

Auch kann zweckmäßigerweise der repräsentative Wert durch Mittelwertbildung aus den Einzelmeßwerten gebildet werden.

Um offensichtliche Fehlmessungen oder atypische Werte auszuschließen ist es ratsam, wenn unterhalb eines vorgegebenen Pegels liegende Einzelmeßwerte von der Mittelwertbildung ausgeschlossen werden.

In zweckmäßiger Weise kann der repräsentative Wert durch Ermittlung eines Medianwertes oder auch durch Ermittlung des Spitzenwertes aus den Einzelmeßwerten gebildet werden.

Um den unerwünschten Einfluß des sogenannten "up/down ramping" zu eliminieren bzw. zu verringern, ist auch vorgegeben, daß für jeden Einzelmeßwert dessen zeitlicher Verlauf mit dem abgespeicherten, vorgegebenen Verlauf des up/down ramping zwischen zwei Bursts verglichen wird und bei Übereinstimmung eine entsprechende Korrektur des Meßwertes erfolgt.

Aus dem gleichen Grund kann es vorteilhaft sein, wenn das Meßintervall in Subintervalle unterteilt wird, deren Dauer im wesentlichen der Dauer des up/down ramping zwischen zwei Bursts entspricht, und der Meßwert jenes Subintervalls aus allen an der Ermittlung beteiligten Meßintervallen verworfen wird, der den niedrigsten Wert aufweist.

Eine vereinfachte, in den meisten Fällen ausreichende Alternative besteht darin, daß nicht das entsprechende Subintervall aus allen an der Ermittlung beteiligten Meßintervallen, sondern das entsprechende Subintervall eines jeden Meßintervalls verworfen wird.

Falls die relative Lage des Zeitrasters eines benachbarten HF-Trägers bekann ist, läßt sich der Einfluß des up/downramping dadurch leicht vermeiden, daß die Meßintervalle bezüglich dieses Zeitrasters so gelegt werden, daß kein Meßintervall in den Zeitraum des up/down ramping fällt.

Als Meßintervall wird zweckmäßigerweise ein ganzzahliger Bruchteil der Zeitschlitzdauer gewählt, wobei das Meßintervall bevorzugt zwischen der Hälfte und einem Sechstel der Burstdauer beträgt.

Zur Lösung der gestellten Aufgabe dient weiters ein Mobilfunkgerät der zu Beginn genannten Art, bei welchem erfindungsgemäß die zeitabhängige Steuerung dazu eingerichtet ist, der zumindest einen Speicher aufweisenden Pegelmeß- und Speichereinheit als Meßintervall für jede Einzelmessung einen Teil der TDMA-Zeitschlitzdauer vorzugeben.

Ein solches Mobilfunkgerät kann dazu eingerichtet sein, die zuvor genannten zusätzlichen und vorteilhaften Verfahrensschritte durchzuführen bzw. zu ermöglichen.

Die Erfindung samt weiterer Vorteile ist im folgenden beispielhaft unter Bezugnahme auf die Zeichnungen erläutert, in welcher zeigen:
Fig. 1 in einem Diagramm die prinzipiellen Meßverfahren nach dem Stand der Technik bzw. nach der Erfindung,
Fig. 2 gleichfalls in einem Diagramm eine Variante der Erfindung und

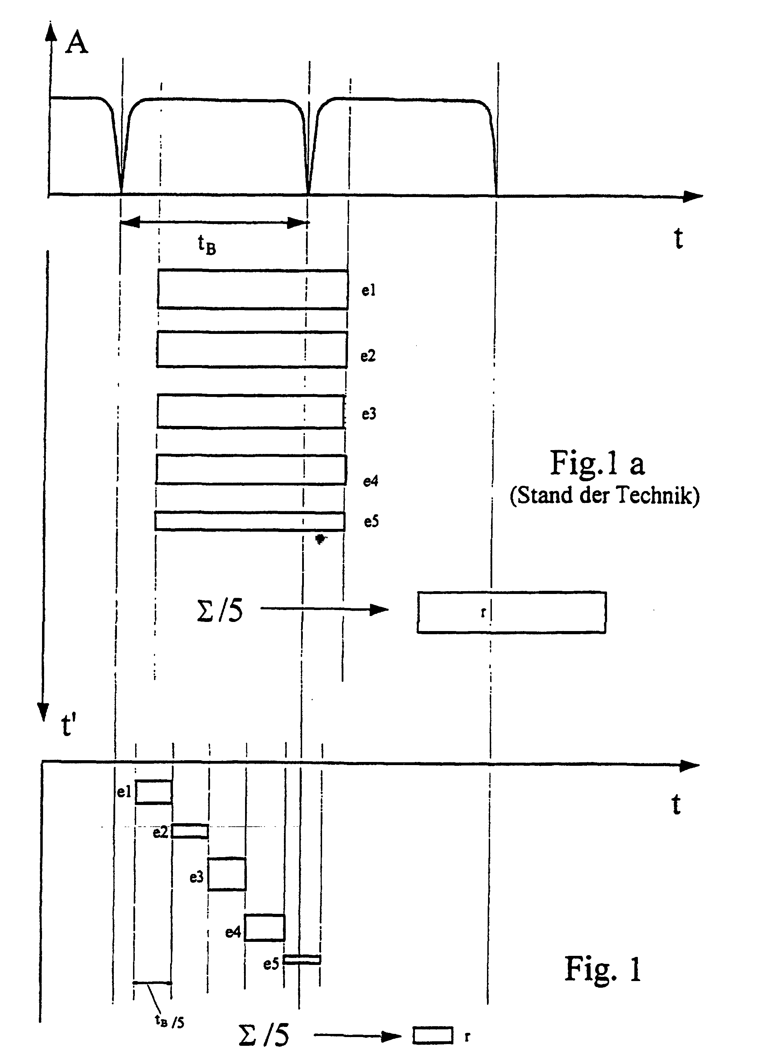

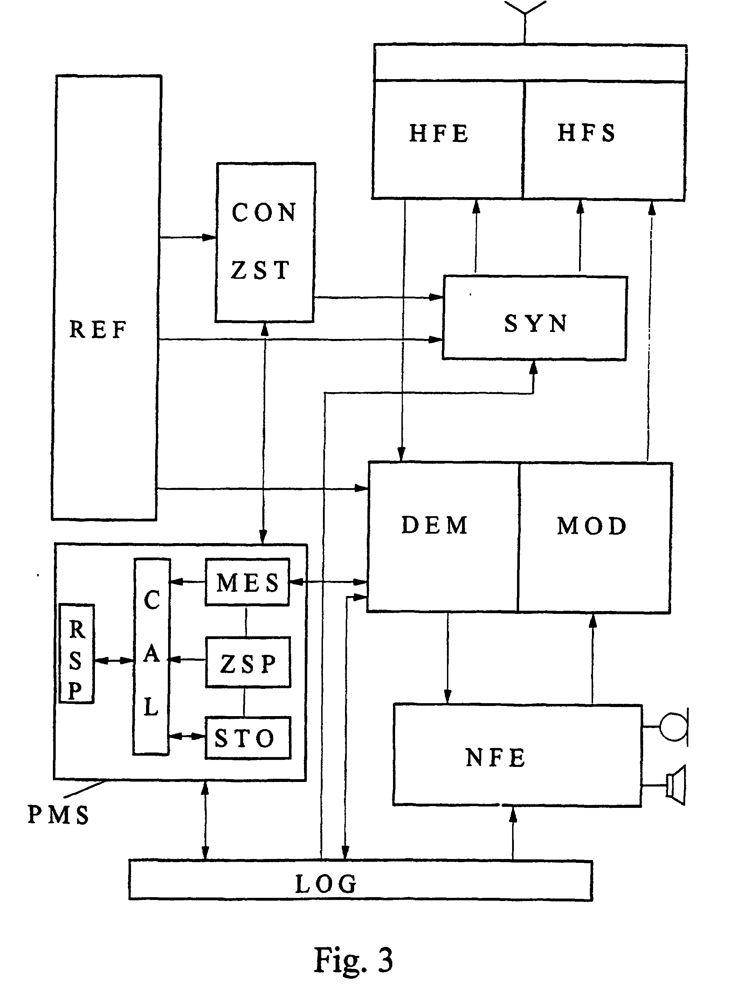

Fig. 3 in einem Blockschaltbild ein Mobilfunkgerät gemäß der Erfindung. Zunächst wird auf Fig. 1a bezug genommen, in welcher aufeinanderfolgende Bursts gezeigt sind, die je eine Dauer t_{B} aufweisen und mit einer Amplitude A an dem Standort eines Mobilfunkgerätes eintreffen. Ausgangspunkt ist ein Mobilfunksystem, das nach einem TDMA-Verfahren (Time Division Multiple Access) arbeitet, wie beispielsweise das GSM-System. In diesem System muß das Mobilfunkgerät regelmäßig auf vorgegebenen Frequenzen die Feldstärke messen, was eingangs bereits näher erläutert wurde. Die Burstdauer t_{B} liegt beispielsweise in der Größenordnung von 500 µs. Nach dem Stand der Technik auf den sich Fig. 1a bezieht, werden aufeinanderfolgend mehrere (hier fünf) Messungen über die Dauer eines Bursts durchgeführt. Als Meßergebnis treten fünf unterschiedliche Amplitudenwerte auf, die in Fig. 1a als Blöcke "e1" bis "e5" dargestellt sind, die längs einer zweiten Zeitachse t' aufeinanderfolgen. Diese Amplituden bzw. Einzelmeßwerte werden addiert und zur Mittelwertbildung durch fünf dividiert, sodaß sich als repräsentativ ermittelter Wert r der arithmetische Mittelwert ergibt.

Die in Fig. 1 b im Prinzip dargestellte Erfindung sieht vor, daß jede Einzelmessung nur über einen Bruchteil der Zeitschlitz(=burst)dauer durchgeführt wird, im vorliegenden Fall über t_{B}/5. Auch im Falle der Erfindung werden mehrere, hier fünf Messungen hintereinander vorgenommen, zweckmäßigerweise jedoch bezüglich des Zeitrasters versetzt. Dies bedeutet, daß die Einzelmessungen beispielsweise in Abständen von (t_{B}+t_{B}/5) bzw. von Vielfachen, n*(t_{B}+t_{B}/5)erfolgen. Die Ergebnisse der Einzelmessungen können gleichfalls arithmetisch gemittelt werden. Die Messungen erfolgen nicht notwendigerweise während unmittelbar aufeinanderfolgender Bursts, sondern im allgemeinen in viel größeren Abständen, z. B. von einer Sekunde, im GSM-System etwa 1600 Bursts entsprechend.

Zur weiteren Erläuterung der Erfindung wird nun auf Fig. 3 bezug genommen, in welcher ein vereinfachtes und beispielsweises Blockschaltbild eines Mobilfunkgeräts nach der Erfindung dargestellt ist. Das Mobilfunkgerät besitzt einen HF-Sendeteil HFS und einen HF-Empfangsteil HFE, wobei beide HF-Teile in üblicher Weise durch einen Synthesizer SYN gesteuert werden. Eine Referenzfrequenzeinheit REF liefert ein Referenzsignal unter anderem auch an den Synthesizer. Den beiden HF-Teilen HFS und HFE sind Modulator- und Demodulatoreinheiten MOD und DEM zugeordnet, welche zum Modulieren und Demodulieren der Signale einer NF-Einheit NFE sowie aller übrigen benötigten Signale, insbesondere Datensignale geeignet sind.

Das Mobilfunkgerät besitzt ferner eine Pegelmeß- und Speichereinheit PMS, die von einer zeitabhängigen Steuerung ZST mit einem Zähler CON angesteuert wird. Die zeitabhängige Steuerung ZST erhält ein Referenzsignal von der Referenzfrequenzeinheit und liefert auch an den Synthesizer SYN ein Steuersignal.

Die Pegelmeß- und Speichereinheit PMS, die ihrerseits die zeitabhängige Steuerung ZST beeinflussen kann, besitzt als wesentliche Funktionsgruppen eine Meßeinheit MES, die Pegelsignale von dem Demodulator DEM erhält, einen Zwischenspeicher ZSP, einen Speicher STO, einen Ramping-Speicher RSP und einen Rechenteil CAL. Einer Steuerlogik LOG, z. B. einem Mikrocontroller, kommt die Aufgabe zu, das Management über die meisten Funktionsblöcke des Mobilfunkgerätes zu übernehmen. So kann die Steuerlogik LOG nicht benötigte Funktionsblöcke abschalten bzw. später wieder einschalten. Auch wird der Zähler CON bzw. die zeitabhängige Steuerung ZST durch die Steuerlogik LOG programmiert, um die HF-Einheit HFE, den Demodulator DEM und den Rechenteil CAL ein- und auszuschalten.

Die oben erwähnte Bildung eines arithmetischen Mittelwertes aus den Ergebnissen von z. B. fünf Einzelmessungen kann unschwer dadurch erreicht werden, daß die nacheinander von der Meßeinheit MES ermittelten Werte in dem Zwischenspeicher ZSP abgelegt und von dem Rechenteil CAL verarbeitet werden. Der berechnete Mittelwert kann in den Speicher STO abgelegt werden, in dem - entsprechend der Auswahl überwachter Kanäleständig z. B. 32 aktuelle Mittelwerte von Pegelmessungen an 32 HF-Trägern vorliegen.

Es leuchtet ein, daß auch die Teilung des TDMA-Zeitrasters, d. h. der Burstlänge t_{B}, in beispielsweise fünf Teile und das Durchführen aufeinanderfolgender, dann um (t_{B}+t_{B}/5) oder auch um (n.t_{B}+t_{B}/5) versetzter Einzelmessungen durch den Zähler CON und die zeitabhängige Steuerung ZST gemeinsam mit der Pegelmeß- und Speichereinheit PMS erfolgen kann.

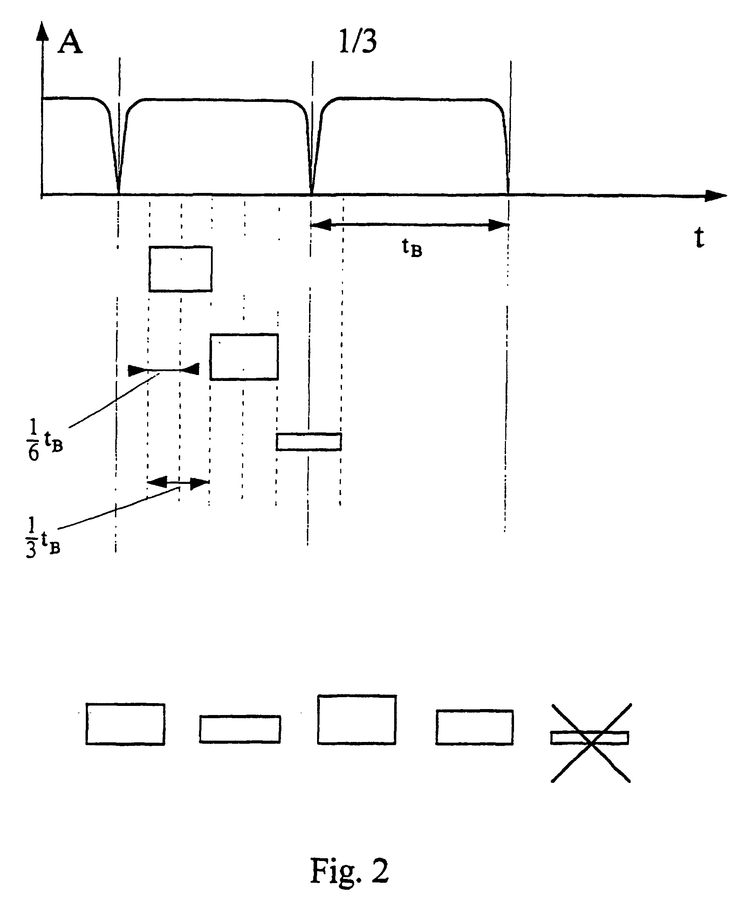

Fig. 2 zeigt nochmals, etwas größer als Fig. 1, aufeinanderfolgende Bursts der Dauer t_{B} mit einem zwischen den Bursts auftretenden "up/down ramping". Damit wird ein z. B. im GSM-System erlaubter Amplitudenabfall bezeichnet, der auftritt, wenn die Basisstation zwischen zwei Bursts kurzfristig mit geringerer Leistung sendet. Die daraus resultierenden Feldstärkeeinbrüche können bei der Pegelmessung zu Werten führen, welche nicht den tatsächlichen Gegebenheiten entsprechen.

Um hier eine Verbesserung zu erzielen, kann man - dies ist auch in Fig. 2 gezeigt - die Meßintervalle t_{M} in Subintervalle teilen, deren Dauer z.B. der wesentlichen Dauer tᵣ des up/down ramping entspricht und dann jenen Einzelmeßwert verwerfen, d. h. von der weiteren Verarbeitung wie Mittelwertbildung, ausschließen. In Fig. 2 beträgt die Dauer eines Meßintervalls t_{M}=t_{B}/3 und die Dauer eines Subintervalls t_{M}/2=t_{B}/6. In Fig. 2 unten ist dargestellt, daß dann der niedrigste von sechs Einzelmeßwerten verworfen wird.

Es ist möglich, nur die entsprechenden Subintervalle aus allen an der Ermittlung beteiligten Meßintervallen oder, und dies ist einfacher und meist gleichfalls ausreichend, die entsprechenden Subintervalle eines jeden Meßintervalls zu verwerfen.

Prinzipiell kann man "Ausrutscher nach unten", die z.B. wegen einer durch ein bewegtes Fahrzeug erfolgten, vorübergehenden Abschattung der Antenne des Mobilfunkgerätes auftreten, von der Auswertung ausschließen. Beispielsweise kann der Rechenteil CAL Einzelmeßwerte ausschließen, die unterhalb eines vorgegebenen Pegels liegen, wobei es sich um einen relativ oder absolut festgelegten Pegel handeln kann.

Das oben erwähnte up/down ramping kann allerdings auch ohne verwerfen einer Messung berücksichtigt werden, falls man gemäß Fig. 3 einen Ramping-Speicher RSP vorsieht, in welchem der zu erwartende zeitliche Verlauf des up/down ramping abgespeichert ist. Über den Rechenteil CAL kann nun der zeitliche Verlauf jeder Einzelmessung mit dem abgespeicherten Verlauf verglichen werden. Bei positivem Vergleich wird der Meßwert als systemspezifisch erkannt und - mit einem entsprechenden Korrekturfaktor versehen - weiterverarbeitet. Dies ist insoferne vorteilhaft, als ein Verwerfen von Meßwerten in Hinblick auf die Aufgabe der Erfindung, nämlich Strom zu sparen, nicht sonderlich erwünscht ist.

Bei manchen Systemen bzw. Geräten ist die relative Lage des Zeitrasters von benachbarten HF-Trägern bekannt. In diesen Fällen kann der Einfluß des up/down ramping auf die Messungen einfach dadurch beseitigt werden, daß man die Meßintervalle so verschiebt, daß in den Zeitraum des up/down ramping überhaupt kein Meßintervall fällt, z. B. das Meßintervall genau in die Mitte des Bursts fällt. Die Relativlage eines Nachbarzeitrasters kann z. B aus vorangegangenen Messungen bekannt sein, im GSM-System durch Decodieren des sogenannten "Sync"-Bursts.

Die Bildung eines arithmetischen Mittelwertes aus den Einzelmeßwerten zwecks Gewinnung eines repräsentativen Pegelmeßwertes ist natürlich keinesfalls die einzige Möglichkeit, um zu praxisgerechten Pegelmeßwerten zu gelangen. Die Pegelmeß- und Speichereinheit kann vielmehr auch dazu eingerichtet sein, den repräsentativen Wert durch Ermittlung eines Medianwertes oder durch Ermittlung des Spitzenwertes aus den Einzelmeßwerten zu bilden.

Es ist in den meisten Fällen zweckmäßig, wenn die zeitabhängige Steuerung ZST und der Zähler CON als Meßintervalle einen ganzzahligen Bruchteil der Zeitschlitzdauer t_{B} vorgeben, wobei dieser Bruchteil praxisgerecht zwischen der Hälfte und einem Sechstel der Zeitschlitzdauer liegt.

## Patentansprüche

1. Verfahren zum Bestimmen der Empfangsfeldstärke der HF-Träger von Nachbarkanälen sowie des aktuellen Kanals bei einem in einem TDMA-System betriebenen Mobilfunkgerät, bei welchem für jeden HF-Träger mehrere Einzelmessungen während eines Ermittlungszeitraumes durchgeführt werden und aus den entsprechenden Einzelmeßwerten ein repräsentativer ermittelter Wert gebildet wird
**dadurch gekennzeichnet, daß**
für jede Einzelmessung als Meßintervall ein Teil der Zeitschlitzdauer gewählt wird,
für jeden Einzelmeßwert dessen zeitlicher Verlauf mit dem abgespeicherten, vorgegebenen Verlauf des up/down ramping zwischen zwei Bursts verglichen wird und bei Übereinstimmung eine entsprechende Korrektur des Meßwertes erfolgt.

2. Verfahren nach Anspruch 1, **dadurch gekennzeichnet, daß** die Einzelmessungen bezüglich des Zeitrasters versetzt erfolgen.

3. Verfahren nach Anspruch 1 oder 2, **dadurch gekennzeichnet, daß** der repräsentative Wert durch Mittelwertbildung aus den Einzelmeßwerten gebildet wird.

4. Verfahren nach Anspruch 3, **dadurch gekennzeichnet, daß** unterhalb eines vorgegebenen Pegels liegende Einzelmeßwerte von der Mittelwertbildung ausgeschlossen werden.

5. Verfahren nach Anspruch 1 oder 2, **dadurch gekennzeichnet, daß** der repräsentative Wert durch Ermittlung eines Medianwertes aus den Einzelmeßwerten gebildet wird.

6. Verfahren nach Anspruch 1 oder 2, **dadurch gekennzeichnet, daß** der repräsentative Wert durch Ermittlung des Spitzenwertes der Einzelmeßwerte gebildet wird.

7. Verfahren nach einem der Ansprüche 1 bis 6, **dadurch gekennzeichnet, daß** jedes Meßintervall in Subintervalle unterteilt wird, deren Dauer im wesentlichen der Dauer des up/down ramping zwischen zwei Bursts entspricht, und der Meßwert jenes Subintervalls aus allen an der Ermittlung beteiligten Meßintervallen verworfen wird, der den niedrigsten Wert aufweist.

8. Verfahren nach einem der Ansprüche 1 bis 6, **dadurch gekennzeichnet, daß** jedes Meßintervall in Subintervalle unterteilt wird, deren Dauer im wesentlichen der Dauer des up/down ramping zwischen zwei Bursts entspricht, und der Meßwert jenes Subintervalls eines jeden Meßintervalls verworfen wird, der den niedrigsten Wert aufweist.

9. Verfahren nach einem der Ansprüche 1 bis 6, **dadurch gekennzeichnet, daß** bei Kenntnis der relativen Lage des Zeitrasters eines benachbarten HF-Trägers die Meßintervalle bezüglich dieses. Zeitrasters so gelegt werden, daß kein Meßintervall in den Zeitraum des up/down ramping fällt.

10. Verfahren nach einem der Ansprüche 1 bis 9, **dadurch gekennzeichnet, daß** als Meßintervall ein ganzzahliger Bruchteil der Zeitschlitzdauer gewählt wird.

11. Verfahren nach Anspruch 10, **dadurch gekennzeichnet, daß** das Meßintervall zwischen der Hälfte und einem Sechstel der Burstdauer beträgt.

12. Mobilfunkgerät zum Betrieb in einem TDMA-System, mit von einem Synthesizer (SYN) gesteuerten HF-Empfangs- und Sendeeinheiten (HFS, HFE), mit einer NF-Einheit (NFE) zugeordneten Modulator- und Demodulatoreinheiten (MOD, DEM), mit einer Pegelmeß- und Speichereinheit (PMS), mit einem Zähler (CON) und einer zeitabhängigen Steuerung (ZST), welche dem Synthesizer, den HF-Teilen, der Demodulatoreinheit sowie der Pegelmeß- und Speichereinheit zugeordnet ist, mit einer Frequenzreferenzeinheit (REF) für Synthesizer, Zähler und zeitabhängige Steuerung und für die Modulator- und Demodulatoreinheiten, sowie mit einer Steuerlogik (LOG) zur Steuerung der Pegelmeß- und Speichereinheit und anderer Einheiten, wobei die Steuerlogik (LOG) und der Zähler (CON) mit der zeitabhängigen Steuerung (ZST) in Zusammenwirken mit dem HF-Empfangsteil (HFE), dem Demodulator (DEM) und der Pegelmeß- und Steuereinheit (PMS) dazu eingerichtet sind, während eines Ermittlungszeitraumes die Pegel vorgegebener HF-Träger wiederholt zu messen und aus den ermittelten Einzelmeßwerten einen repräsentativen Wert zu bilden,
**dadurch gekennzeichnet, daß**
die zeitabhängige Steuerung (ZST) dazu eingerichtet ist, der zumindest einen Speicher (ZSP, STO) sowie einen Rechen-teil (CAL) aufweisenden Pegelmeß- und Speichereinheit (PMS) als Meßintervall (t_{M}) für jede Einzelmessung einen Teil der TDMA-Zeitschlitzdauer (t_{B}) vorzugeben
der Rechenteil (CAL) dazu eingerichtet ist, für jeden Einzelmeßwert dessen zeitlichen Verlauf mit dem in einem Ramping-Speicher (RSP) abgespeicherten Verlauf des up/down ramping zwischen zwei Bursts zu vergleichen und bei Übereinstimmung den Meßwert entsprechend zu korrigieren..

13. Mobilfunkgerät nach Anspruch 12, **dadurch gekennzeichnet, daß** die zeitabhängige Steuerung (ZST) zusammen mit der Pegelmeß- und Speichereinheit (PMS) dazu eingerichtet ist, aufeinanderfolgende Einzelmessungen bezüglich des Zeitrasters versetzt durchzuführen.

14. Mobilfunkgerät nach Anspruch 12 oder 13, **dadurch gekennzeichnet, daß** der Rechenteil (CAL) dazu eingerichtet ist, den repräsentativen Wert durch Mittelwertbildung aus den Einzelmeßwerten zu bilden.

15. Mobilfunkgerät nach Anspruch 14, **dadurch gekennzeichnet, daß** der Rechenteil (CAL) dazu eingerichtet ist, unterhalb eines vorgegebenen Pegels liegende Einzelmeßwerte von der Mittelwertbildung auszuschließen.

16. Mobilfunkgerät nach Anspruch 12 oder 13, **dadurch gekennzeichnet, da**ß der Rechenteil (CAL) dazu eingerichtet ist, den repräsentativen Wert durch Ermittlung eines Medianwertes aus den Einzelmeßwerten zu bilden.

17. Mobilfunkgerät nach Anspruch 12 oder 13, **dadurch gekennzeichnet, daß** der Rechenteil (CAL) dazu eingerichtet ist, den repräsentativen Wert durch Ermittlung des Spitzenwertes der Einzelmeßwerte zu bilden.

18. Mobilfunkgerät nach einem der Ansprüche 12 bis 17, **dadurch gekennzeichnet, daß** die zeitabhängige Steuerung (ZST) und der Rechenteil (CAL) der Pegelmeß- und Steuereinheit (PMS) dazu eingerichtet sind, das Meßintervall (t_{M}) in Subintervalle zu unterteilen, deren Dauer im wesentlichen der Dauer des up/down ramping zwischen zwei Bursts entspricht, und den Meßwert jenes Subintervalls aus allen an der Ermittlung beteiligten Meßintervallen zu verwerfen, der den niedrigsten Wert aufweist.

19. Mobilfunkgerät nach einem der Ansprüche 12 bis 17, **dadurch gekennzeichnet, daß** die zeitabhängige Steuerung (ZST) und der Rechenteil (CAL) der Pegelmeß- und Steuereinheit (PMS) dazu eingerichtet sind, das Meßintervall (t_{M}) in Subintervalle zu unterteilen, deren Dauer im wesentlichen der Dauer des up/down ramping zwischen zwei Bursts entspricht, und den Meßwert jenes Subintervalls eines jeden Meßintervalls zu verwerfen, der den niedrigsten Wert aufweist.

20. Mobilfunkgerät nach einem der Ansprüche 12 bis 17, **dadurch gekennzeichnet, daß** die zeitabhängige Steuerung (ZST), die Steuerlogik (LOG) und die Pegelmeß- und Speichereinheit (PMS) dazu eingerichtet sind, die relative Lage des Zeitrasters eines benachbarten HF-Trägers zu erfassen und die Meßintervalle bezüglich dieses Zeitrasters so zu legen, daß kein Meßintervall in den Zeitraum des up/down ramping fällt.

21. Mobilfunkgerät nach einem der Ansprüche 12 bis 20, **dadurch gekennzeichnet, daß** die zeitabhängige Steuerung (ZST) dazu eingerichtet ist, als Meßintervall (t_{M}) einen ganzzahligen Bruchtteil der Zeitschlitzdauer (t_{B}) vorzugeben.

22. Mobilfunkgerät nach Anspruch 21, **dadurch gekennzeichnet, daß** der ganzzahlige Bruchteil zwischen der Hälfte und einem Sechstel der Zeitschlitzdauer (t_{B}) beträgt.

## Claims

1. Method for determining the reception field strength of the RF carriers of adjacent channels and of the present channel in the case of a mobile radio operated in a TDMA system, in the case of which a plurality of individual measurements are carried out for each RF carrier during a measurement time period, a representative, determined value is formed from corresponding individual measured values
**characterized in that**
a part of the time slot duration is chosen as the measurement interval for each individual measurement, the time profile of each individual measured value is compared with the stored, predetermined profile of the up/down ramping between two bursts and, if they correspond, a corresponding correction of the measured value is carried out.

2. Method according to Claim 1, **characterized in that** the individual measurements are carried out offset with respect to the time frame.

3. Method according to Claim 1 or 2, **characterized in that** the representative value is formed from the individual measured values by averaging.

4. Method according to Claim 3, **characterized in that** individual measured values below a predetermined level are excluded from the averaging.

5. Method according to Claim 1 or 2, **characterized in that** the representative value is formed by determining a median value from the individual measured values.

6. Method according to Claim 1 or 2, **characterized in that** the representative value is formed by determining the peak value of the individual measured values.

7. Method according to one of Claims 1 to 6, **characterized in that** each measurement interval is divided into sub-intervals whose duration essentially corresponds to the duration of the up/down ramping between two bursts, and the measured value from that sub-interval which has the lowest value of all the measurement intervals involved with the measurement is rejected.

8. Method according to one of Claims 1 to 6, **characterized in that** each measurement interval is divided into sub-intervals whose duration essentially corresponds to the duration of the up/down ramping between two bursts, and the measured value of that sub-interval which has the lowest value in each measurement interval is rejected.

9. Method according to one of Claims 1 to 6, **characterized in that**, if the relative position of the time frame of an adjacent RF carrier is known, the measurement intervals are defined with respect to this time frame such that no measurement interval occurs in the time period of the up/down ramping.

10. Method according to one of Claims 1 to 9, **characterized in that** an integer fraction of the time slot duration is chosen as the measurement interval.

11. Method according to Claim 10, **characterized in that** the measurement interval is between half and one sixth of the burst duration.

12. Mobile radio for operation in a TDMA system, having RF receiving and transmitting units (HFS, HFE) controlled by a synthesizer (SYN), having modulator and demodulator units (MOD, DEM) assigned to an AF unit (NFE), having a level measurement and storage unit (PMS), having a counter (CON) and having a time-dependent controller (ZST) which is assigned to the synthesizer, to the RF sections, to the demodulator unit and to the level measurement and storage unit, having a frequency reference unit (REF) for the synthesizer, counter and time-dependent controller and for the modulator and demodulator units, and having a control logic device (LOG) for controlling the level measurement and storage unit and other units, the control logic device (LOG) and the counter (CON) being set up with the time-dependent controller (ZST) and interacting with the RF receiving section (HFE), the demodulator (DEM) and the level measurement and control unit (PMS) for the purpose of measuring the levels of predetermined RF carriers repeatedly during a measurement time period and of forming a representative value from the determined individual measured values,
**characterized in that**
the time-dependent controller (ZST) is designed to specify for the level measurement and storage unit (PMS), which has at least one store (ZSP, STO) as well as a calculation section (CAL), a part of the TDMA time slot duration (t_{B}) as the measurement interval (t_{M}) for each individual measurement, the calculation section (CAL) is designed to compare the time profile of each individual measured value with the profile, which is stored in a ramping store (RSP), of the up/down ramping between two bursts and, if they correspond, to correct the measured value as appropriate.

13. Mobile radio according to Claim 12, **characterized in that** the time-dependent controller (ZST) is designed, together with the level measurement and storage unit (PMS), to carry out successive individual measurements offset with respect to the time frame.

14. Mobile radio according to Claim 12 or 13, **characterized in that** the calculation section (CAL) is designed to form the representative value from the individual measured values by averaging.

15. Mobile radio according to Claim 14, **characterized in that** the calculation section (CAL) is designed to exclude from the averaging individual measured values below a predetermined level.

16. Mobile radio according to Claim 12 or 13, **characterized in that** the calculation section (CAL) is designed to form the representative value from the individual measured values by determining a median value.

17. Mobile radio according to Claim 12 or 13, **characterized in that** the calculation section (CAL) is designed to form the representative value by determining the peak value of the individual measured values.

18. Mobile radio according to one of Claims 12 to 17, **characterized in that** the time-dependent controller (ZST) and the calculation section (CAL) of the level measurement and control unit (PMS) are designed to split the measurement interval (t_{M}) into sub-intervals whose duration essentially corresponds to the duration of the up/down ramping between two bursts, and to reject the measured value of that sub-interval which has the lowest value of all the measurement intervals involved in the measurement.

19. Mobile radio according to one of Claims 12 to 17, **characterized in that** the time-dependent controller (ZST) and the calculation section (CAL) of the level measurement and control unit (PMS) are designed to split the measurement interval (t_{M}) into sub-intervals whose duration corresponds essentially to the duration of the up/down ramping between two bursts, and to reject the measured value of that sub-interval which has the lowest value in each measurement interval.

20. Mobile radio according to one of Claims 12 to 17, **characterized in that** the time dependent controller (ZST), the control logic device (LOG) and the level measurement and storage unit (PMS) are designed to detect the relative position of the time frame of an adjacent RF carrier and to set the measurement intervals with respect to this time frame such that no measurement interval occurs in the time period of the up/down ramping.

21. Mobile radio according to one of Claims 12 to 20, **characterized in that** the time-dependent controller (ZST) is designed to specify as the measurement interval (t_{M}) an integer fraction of the time slot duration (t_{B}).

22. Mobile radio according to Claim 21, **characterized in that** the integer fraction is between half and one sixth of the time slot duration (t_{B}).

## Revendications

1. Procédé pour la détermination de l'intensité du champ de réception des porteuses HF de canaux voisins et du canal actuel avec un appareil de téléphonie mobile exploité dans un système TDMA, dans lequel plusieurs mesures individuelles sont effectuées pour chaque porteuse HF pendant une période de calcul et une valeur représentative et calculée est formée à partir des valeurs correspondantes de mesure individuelle,
**caractérisé en ce qu'**une partie de la durée du créneau temporel est choisie pour chaque mesure individuelle comme l'intervalle de mesure, sa courbe dans le temps est comparée pour chaque valeur de mesure individuelle avec la courbe prédéfinie et mémorisée du "up/down ramping" entre deux rafales et une correction appropriée de la valeur de mesure intervient en cas de concordance.

2. Procédé selon la revendication 1, **caractérisé en ce que** les mesures individuelles interviennent de façon décalée par rapport à la trame de temps.

3. Procédé selon la revendication 1 ou 2, **caractérisé en ce que** la valeur représentative est formée par la formation de valeur moyenne à partir des valeurs de mesure individuelle.

4. Procédé selon la revendication 3, **caractérisé en ce que** des valeurs de mesure individuelle se situant au-dessous d'un niveau prédéfini sont exclues de la formation de la moyenne.

5. Procédé selon la revendication 1 ou 2, **caractérisé en ce que** la valeur représentative est formée par la détermination d'une valeur moyenne à partir des valeurs de mesure individuelle.

6. Procédé selon la revendication 1 ou 2, **caractérisé en ce que** la valeur représentative est formée par la détermination de la valeur maximale des valeurs de mesure individuelle.

7. Procédé selon l'une quelconque des revendications 1 à 6, **caractérisé en ce que** chaque intervalle de mesure est subdivisé en sous-intervalles, dont la durée correspond sensiblement à la durée du "up/down ramping" entre deux rafales, et on rejette la valeur mesurée de ce sous-intervalle constitué de tous les intervalles de mesure concernés par le calcul qui présente la valeur la plus faible.

8. Procédé selon l'une quelconque des revendications 1 à 6, **caractérisé en ce que** chaque intervalle de mesure est subdivisé en sous-intervalles, dont la durée correspond sensiblement à la durée du "up/down ramping" entre deux rafales, et on rejette la valeur mesurée de ce sous-intervalle de chaque intervalle de mesure qui présente la valeur la plus faible.

9. Procédé selon l'une quelconque des revendications 1 à 6, **caractérisé en ce que**, si on connaît la position relative de la trame de temps d'une porteuse HF voisine, les intervalles de mesure sont définis par rapport à cette trame de temps de telle sorte qu'aucun intervalle de mesure ne rentre dans la période de temps du up /down ramping.

10. Procédé selon l'une quelconque des revendications 1 à 9, **caractérisé en ce qu'**une fraction entière de la durée du créneau temporel est choisie comme intervalle de mesure.

11. Procédé selon la revendication 10, **caractérisé en ce que** l'intervalle de mesure est situé entre la moitié et un sixième de la durée de rafale.

12. Appareil de téléphonie mobile pour l'exploitation dans un système TDMA, comprenant des unités de réception et d'émission HF (HFS, HFE) commandées par un synthétiseur (SYN), des unités de modulateur et de démodulateur (MOD, DEM) attribuées à une unité BF (BFE), une unité de mesure de niveau et de stockage (PMS), un compteur (CON) et une commande (ZST) dépendante du temps, qui est attribuée à un synthétiseur, aux parties HF, à l'unité de démodulateur ainsi qu'à l'unité de mesure de niveau et de stockage, une unité de référence de fréquence (REF) pour le synthétiseur, le compteur et la commande dépendante du temps et pour les unités de modulateur et de démodulateur, et une logique de commande (LOG) pour la commande de l'unité de mesure de niveau et de stockage et d'autres unités, la logique de commande (LOG) et le compteur (CON) étant aménagés avec la commande (ZST) dépendante du temps en interaction avec la partie de réception HF (HFE), le démodulateur (DEM) et l'unité de mesure de niveau et de commande (PMS) pour mesurer de façon répétée le niveau de porteuses HF prédéfinies pendant une période de calcul et former une valeur représentative à partir des valeurs de mesure individuelle calculées,
**caractérisé en ce que** la commande (ZST) dépendante du temps est aménagée pour prédéfinir une partie de la durée de créneau temporel TDMA (t_{B}) pour l'unité de mesure de niveau et de stockage (PMS) présentant au moins une mémoire (ZSP, STO) et une partie de calcul (CAL) comme intervalle de mesure (t_{M}) pour chaque mesure individuelle, **en ce que** la partie de calcul (CAL) est aménagée pour comparer pour chaque valeur de mesure individuelle sa courbe dans le temps avec la courbe, mémorisée dans une mémoire de "ramping" (RSP), du "up/down ramping" entre deux rafales et corriger en conséquence la valeur mesurée en cas de concordance.

13. Appareil de téléphonie mobile selon la revendication 12, **caractérisé en ce que** la commande (ZST) dépendante du temps est aménagée conjointement avec l'unité de mesure de niveau et de stockage (PMS) pour effectuer des mesures individuelles successives décalées par rapport à la trame de temps.

14. Appareil de téléphonie mobile selon la revendication 12 ou 13, **caractérisé en ce que** la partie de calcul (CAL) est aménagée pour former la valeur représentative par formation de moyenne à partir des valeurs de mesure individuelle.

15. Appareil de téléphonie mobile selon la revendication 14, **caractérisé en ce que** la partie de calcul (CAL) est aménagée pour exclure de la formation de la valeur moyenne des valeurs de mesure individuelle situées au-dessous d'un niveau prédéfini.

16. Appareil de téléphonie mobile selon la revendication 12 ou 13, **caractérisé en ce que** la partie de calcul (CAL) est aménagée pour former la valeur représentative par le calcul d'une valeur moyenne à partir des valeurs de mesure individuelle.

17. Appareil de téléphonie mobile selon la revendication 12 ou 13, **caractérisé en ce que** la partie de calcul (CAL) est aménagée pour former la valeur représentative par le calcul de la valeur maximale des valeurs de mesure individuelle.

18. Appareil de téléphonie mobile selon l'une quelconque des revendications 12 à 17, **caractérisé en ce que** la commande (ZST) dépendante du temps et la partie de calcul (CAL) de l'unité de mesure de niveau et de commande (PMS) sont aménagées pour subdiviser l'intervalle de mesure (t_{M}) en sous-intervalles, dont la durée correspond sensiblement à la durée du "up/down ramping" entre deux rafales et rejeter la valeur de mesure de ce sous-intervalle constitué de tous les intervalles de mesure concernés par le calcul qui présente la valeur la plus faible.

19. Appareil de téléphonie mobile selon l'une quelconque des revendications 12 à 17, **caractérisé en ce que** la commande (ZST) dépendante du temps et la partie de calcul (CAL) de l'unité de mesure de niveau et de commande (PMS) sont aménagées pour subdiviser l'intervalle de mesure (t_{M}) en sous-intervalles, dont la durée correspond sensiblement à la durée du "up/down ramping" entre deux rafales, et rejeter la valeur de mesure de ce sous-intervalle de chaque intervalle de mesure qui présente la plus faible des valeurs.

20. Appareil de téléphonie mobile selon l'une quelconque des revendications 12 à 17, **caractérisé en ce que** la commande (ZST) dépendante du temps, la logique de commande (LOG) et l'unité de mesure de niveau et de stockage (PMS) sont aménagées pour enregistrer la position relative de la trame de temps d'une porteuse HF voisine et disposer les intervalles de mesure par rapport à cette trame de temps de telle sorte qu'aucun intervalle de mesure ne tombe dans la période du "up/down ramping".

21. Appareil de téléphonie mobile selon l'une quelconque des revendications 12 à 20, **caractérisé en ce que** la commande (ZST) dépendante du temps est aménagée pour prédéfinir comme intervalle de mesure (t_{M}) une fraction entière de la durée de créneau temporel t_{B}.

22. Appareil de téléphonie mobile selon la revendication 21, **caractérisé en ce que** la fraction entière est située entre la moitié et un sixième de la durée de créneau temporel (t_{B}).
